# EUROPÄISCHE PATENTSCHRIFT

(11) **EP 3 192 587 B1**
(45) Veröffentlichungstag und Bekanntmachung des Hinweises auf die Patenterteilung: **22.07.2020**
(21) Anmeldenummer: 17150755.1
(22) Anmeldetag: 10.01.2017
(51) Int. Cl.: B05B 13/06, B05B 13/02, B05B 7/04, B05B 12/18, B05B 12/32, B05D 5/08, B05D 1/02, B05D 7/22, B05B 12/08, B05B 12/12, A61M 5/31, B05D 3/02

(54) **VERFAHREN UND VORRICHTUNG ZUR SILIKONISIERUNG DER INNENFLÄCHE VON HOHLKÖRPERN**
METHOD AND DEVICE FOR SILICONISING THE INTERIOR SURFACE OF HOLLOW BODIES
PROCÉDÉ ET DISPOSITIF DE SILICONISATION DE LA FACE INTÉRIEURE DE CORPS CREUX

(30) Priorität: 12.01.2016 DE 102016200223
(43) Veröffentlichungstag der Anmeldung: 19.07.2017
(73) Patentinhaber: Schott AG, 55122 Mainz (DE)
(72) Erfinder: STRITT, Dominik, 79108 Freiburg (DE); KRÄMER, Christian, 79588 Efringen-Kirchen (DE); HETZE, Philipp, 79424 Auggen (DE); WETZEL, Tobias, 79294 Sölden (DE); JUST, Mario, 79423 Heitersheim (DE)
(74) Vertreter: Mehler Achler

(56) Entgegenhaltungen:
- EP-A1- 1 818 069
- EP-A2- 1 531 009
- WO-A1-2015/170198
- WO-A2-03/066950
- CN-Y- 201 394 523
- DE-B1- 1 482 615
- DE-C- 747 725
- DE-C1- 19 509 223
- DE-C2- 19 741 824
- FR-A1- 2 601 888
- US-A- 2 547 884
- US-A- 3 741 149

## Beschreibung

Die Erfindung betrifft ein Verfahren zur Silikonisierung der Innenfläche von Hohlkörpern, gemäß dem Oberbegriff des Anspruchs 1. Die Erfindung betrifft ferner eine Beschichtungsvorrichtung zur Silikonisierung der Innenfläche von Hohlkörpern.

Mit einer Innensilikonisierung versehene hohlzylindrische Körper sind seit vielen Jahren bekannt und werden z. B. als Behälter für pharmazeutische Primärpackmittel verwendet. Diese Behälter bestehen in der Regel aus einem länglichen Hohlkörper, der zumindest über einen Teil seiner axialen Länge zylindrisch ausgebildet, und in diesem zylindrischen Bereich mit einer Silikon-Gleitschicht versehen ist.

Bei diesen Pharmapackmitteln ist es notwendig, dass der in den Hohlraum eingebrachte elastomere Verschluss, z. B. ein Kolbenstopfen, geschmeidig an der Innenwandung des Hohl-Körpers gleitet. Typische Beispiele sind Spritzenzylinder für vorfüllbare Spritzen, Spritzenkörper von Zylinderampullen und Karpulen, Kolbenbüretten, die in der chemischen Analytik Verwendung finden, Fläschchen und Vials.

Um diesem Problem gerecht zu werden, wird typischerweise auf die Innenwandung des Hohlkörpers eine dünne Silikon-Gleitschicht aufgebracht. Dadurch ist es beispielsweise bei Spritzen möglich, dass der elastomere Kolbenstopfen beim Herunterdrücken durch die Kolbenstange mit geringen Kräften über die Zylinderwand gleitet. Dies ist notwendig, um es dem Arzt zu ermöglichen, eine langsame und genaue Dosierung des Medikamentes auszuführen. Die Beschichtung von Vials dient üblicherweise dazu, der Glasoberfläche hydrophobe Eigenschaften zu verschaffen, die wiederrum das Ablaufverhalten und die Restentleerbarkeit signifikant gegenüber unbeschichteten Vials verbessern.

Üblicherweise wird die Silikonisierung der Hohlkörper in Überkopfstellung durchgeführt, wie dies beispielsweise in der DE 100 00 505 C1, DE 100 368 32 C1 und der DE 197 418 24 C1 beschrieben wird. Dieses Verfahren hat den Nachteil, dass die zu silikonisierenden Hohlkörper vor dem Sprühvorgang gewendet und in eine Überkopfstellung gebracht werden müssen. Dieser Zusatzschritt ist technisch aufwändig und zeitintensiv. Den bekannten Systemen zur Innensilikonisierung mangelt es entweder an der notwendigen Geschwindigkeit oder an der erforderlichen Präzision hinsichtlich der Positionierung der gewendeten Hohlkörper, so dass die Gefahr besteht, dass das Silikonfluid, z. B. nicht in das zu beschichtende Fläschchen sondern auf die Mündung gesprüht wird. Auch Beschädigungen der Hohlkörper beim Wendevorgang oder beim Einführen der Düse in den Hohlkörper können nicht ausgeschlossen werden.

Die US 3,741,149 A betrifft eine Vorrichtung zum Beschichten der Innenseite von Hohlkörpern, bei der die Hohlkörper auf einem Förderband aufrecht stehend zu einem Rondell transportiert werden. Das Rondell ergreift die Hohlkörper, dreht sich um 90° um die eigene Achse und bewegt die Hohlkörper dadurch unter eine Sprühvorrichtung. Die Sprühvorrichtung weist einen Zentrifugalsprühkopf auf, der in vertikaler Richtung bewegt wird und auf diese Weise die gesamte innere Oberfläche des Hohlkörpers beschichtet. Anschließend wird der Hohlkörper durch eine weitere 90°-Bewegung des Rondells auf ein weiteres Förderband abgelegt und dort erneut aufrecht stehend abtransportiert.

Die CN 201 394 523 Y betrifft eine Vorrichtung zum Beschichten der inneren Oberfläche eines Spritzen-Hohlkörpers mit einem Silikonöl. Die Hohlkörper werden über Schienen einem Rondell zugeführt und anschließend durch das Rondell in eine Position unter einem Sprühkopf gebracht. Nach dem Beschichten werden die Hohlkörper über weitere Schienen weiter transportiert.

Die WO 2015/170198 A1 beschreibt ein Verfahren zum Beschichten der Innenseite eines Behälters. Im Gegensatz zu den Dokumenten US 3,741,149 A und CN 201 394 523 Y ist bei der WO 2015/170198 A1 vorgesehen, dass nicht die Behälter, sondern die Sprühdüse bevorzugt an einem Rondell angeordnet ist. Es bleibt insgesamt unklar, wie die Behälter transportiert werden. Es wird lediglich allgemein auf einen Schritt zum Positionieren des Behälters an der Düse hingewiesen. Als Alternative wird auch darauf hingewiesen, dass das Sprühen auch ohne Rondell auskommen kann, wodurch eine Bewegung der Behälter impliziert wird. Jedoch ist nicht beschrieben, wie die Behälter transportiert und positioniert werden.

Auch aus der FR 2 601 888 A1 geht eine Vorrichtung zum Beschichten der inneren Oberfläche von Behältern hervor. Die Behälter werden nicht stehend, sondern an einem Förderband hängend transportiert. Die Vorrichtung weist Düsen auf, die von oben in die Behälter eindringen und dort die innere Oberfläche beschichten.

Die EP 1 818 069 A1 offenbart ein Verfahren zum Herstellen von vorfüllbaren Spritzen, bei denen die Innenseite des Hauptkörpers der Spritze mit einem Silikonöl beschichtet wird. Dabei wird unter Reinraumbedingungen der gewünschte Bereich zunächst silikonisiert und anschließend wird ein Teil der aufgebrachten Silikonmenge entfernt. Details zum Beschichtungsverfahren sind dieser Schrift nicht zu entnehmen.

Aus der EP 1 531 009 A2 geht insbesondere ein System zum Beschichten von Spritzennadeln hervor, bei dem eine Schale mit Lösungsmittel vorgesehen ist, in welche die Sprühdüse eingetaucht wird, wenn gerade kein Beschichtungsvorgang durchgeführt wird.

Die WO 03/066950 A2 offenbart ein Verfahren und eine Vorrichtung zum Benetzen eines laufenden Filamentbündels.

Die DE 14 82 615 B1 betrifft eine Vorrichtung zum Festhalten von Flaschen verschiedenen Durchmessers in Flaschenbehandlungsmaschinen.

Aus der DE 195 09 223 C1 geht eine Mehrstoff-Zerstäuberdüse hervor, die ein Außenrohr sowie ein Emulsions-Innenrohr und darüber hinaus auch eine Mischkammer aufweist.

Die US 2,547,884 offenbart eine Beschichtungsvorrichtung, die dazu verwendet wird, die Innenseiten von Patronenhülsen zu lackieren.

Aus der DE 747 725 ist ferner ein Verfahren zum Lackieren und Trocknen von Konservendosen und ähnlichen Gefäßen bekannt geworden.

Es ist daher Aufgabe der Erfindung, ein Verfahren bereitzustellen, mit dem schnell und zuverlässig eine Innensilikonisierung von Hohlkörpern durchgeführt werden kann. Es ist auch Aufgabe der Erfindung, eine entsprechende Beschichtungsvorrichtung anzugeben.

Diese Aufgabe wird mit einem Verfahren mit den Merkmalen des Anspruchs 1 gelöst. Die erfindungsgemäße Beschichtungsvorrichtung ist Gegenstand des Anspruchs 9.

Das Verfahren ist durch folgende Verfahrensschritte gekennzeichnet:
a) die Hohlkörper werden nacheinander aufrecht stehend unter die Sprühdüse transportiert und mit ihrer nach oben weisenden Öffnung unter der Sprühdüse zentriert positioniert,
b) die Innenfläche des jeweiligen Hohlkörpers wird von oben mittels der Sprühdüse in einem Sprühvorgang mit einem Sprühnebel des Silikonfluids besprüht und
c) die silikonisierten Hohlkörper werden jeweils nach dem Sprühvorgang aufrecht stehend aus dem Bereich der Sprühdüse abtransportiert.

Der Vorteil des Verfahrens besteht darin, dass die Hohlkörper ohne vorherigen Wendevorgang zur Sprühstation transportiert und dort silikonisiert werden können, wodurch der Durchsatz an Hohlkörpern in der Beschichtungsvorrichtung deutlich gesteigert werden konnte. Ein silikonisierter Hohlkörper ist ein mit dem Silikonfluid beschichteter Hohlkörper.

Hohlkörper, wie z. B. Vials werden permanent in dem sichersten Zustand transportiert, nämlich auf ihrem Boden stehend. Beschädigungen der Vials werden dadurch weitgehend vermieden. Der Bereich der Sprühdüse bezeichnet die Position des Hohlkörpers unter der Sprühdüse, in der die Silikonisierung, d. h. der Sprühvorgang, durchgeführt wird.

Der Sprühnebel besteht vorzugsweise aus einer Gas-Fluid-Dispersion, wobei das Fluid, wie z.B. eine Silikonemulsion, in einem Gasstrom dispergiert wird. Als Trägermedium der Dispersion wird vorzugsweise gefilterte Luft verwendet. Der von oben in den Hohlkörper eingeleitete Sprühnebel hat den Vorteil, dass er den gesamten Innenraum des Hohlköpers gleichmäßig ausfüllt, so dass z.B. bei Fläschchen nicht nur die Seitenwand sondern auch der Boden und der Hals des Fläschchens problemlos beschichtet werden können. Diese Silikonisierung der gesamten Innenfläche ist ein Vorteil gegenüber der herkömmlichen Überkopf-Verfahren, mit denen die Beschichtung vom Boden und Flaschenhals nicht oder nur unzureichend möglich ist.

Die Beschichtungsmenge pro Hohlkörper, der ein Innenvolumen von 1 bis 100 ml aufweist, beträgt vorzugsweise 1 - 20 µl, insbesondere 1 - 15 µl des Silikonfluids, besonders bevorzugt 3 - 8 µl des Silikonfluids. Für kleine Hohlkörper mit einem Innenvolumen von 1 - 10 ml beträgt die Beschichtungsmenge vorzugsweise 3 - 6 µl.

Die Öffnung, in die der Sprühnebel eingeleitet wird, ist bei Fläschchen die Einfüllöffnung. Bei Hohlkörpern, wie z.B. Karpulen, die zwei Öffnungen aufweisen, wird vorzugsweise diejenige Öffnung zum Einleiten des Sprühnebels gewählt, die den kleineren Durchmesser aufweist. Die Karpule steht mit dem Ende auf der Transporteinrichtung, das die größere Öffnung aufweist. Da die größere Öffnung in der Regel mit einem größeren Außendurchmesser der Karpule einhergeht, ist die erforderliche Standsicherheit der Karpule gesichert. Da der Sprühnebel durch die größere Öffnung auf das Transportband gelangen kann, kann z.B. eine Bandreinigungseinrichtung zur permanenten Reinigung des Transportbandes vorgesehen sein.

Die Positionierung der Öffnung der Hohlkörper unter der Sprühdüse bedeutet, dass die Sprühdüse nicht in den Hohlkörper eintaucht, sondern in einem Abstand A über der Öffnung angeordnet ist. Es hat sich gezeigt, dass die Einhaltung eines Abstandes A zu einem sehr guten Beschichtungsergebnis hinsichtlich der Homogenität der Beschichtung führt. Außerdem wird eine vollständige Beschichtung, z. B. auch im Flaschenhals von Fläschchen, sichergestellt.

Vorzugsweise liegt der Abstand A zwischen der Ebene der Öffnung des Hohl-körpers und der Spitze der Sprühdüse im Bereich von 0 mm < A ≤ 5 mm bevorzugt im Bereich von 2 mm ≤ A ≤ 3 mm.

Ein weiterer wichtiger Aspekt für ein gutes Beschichtungsergebnis ist die zentrierte Positionierung der Hohlkörper. Die Längsachsen von Sprühdüse und Hohlkörper verlaufen vorzugsweise parallel zueinander und fallen vorzugsweise zusammen. Bei einem Öffnungsdurchmesser des Hohlkörpers von 6 mm bis 16 mm, vorzugsweise 7,5 bis 13 mm, sollte der Zentrierfehler, d.h. der Achsenversatz nur maximal 2 mm, vorzugsweise max. 1 mm betragen. Unter der zentrierten Positionierung wird eine Positionierung mit einem maximalen Zentrierfehler von 2 mm, vorzugsweise max. 1 mm verstanden.

Vorzugsweise wird ein Sprühnebel aus einem Gas, besonders bevorzugt Luft, insbesondere gefilterte Luft, und einem Silikonfluid verwendet.

Vorzugsweise wird als Silikonfluid eine Silikonemulsion aus Wasser und Silikonöl verwendet. Vorzugsweise beträgt der Anteil des Silikonöls 1 - 3 Vol.-% und der des Wassers 97 Vol.-% bis 99 Vol.-%.

Vorzugsweise strömt aus der Sprühdüse ein permanenter Gasstrom, wobei jeweils im Verfahrensschritt b das Silikonfluid zur Erzeugung des Sprühnebels dem Gasstrom zudosiert wird. Die Zudosierung ist auf den Sprühvorgang beschränkt, so dass kein Silikonfluid verloren geht. Die Gaszuführung bzw. der austretende Gasstrom wird in den Sprühpausen nicht unterbrochen. Diese Verfahrensweise hat den Vorteil, dass sich innerhalb sehr kurzer Zeit, d. h. vorzugsweise innerhalb einer Sekunde, ein Sprühnebel mit einer optimalen, insbesondere homogenen Verteilung des Silikonfluids ausbildet, der die gesamte Innenoberfläche des Hohlkörpers benetzt.

Das Beschichtungsergebnis hinsichtlich der Homogenität der Beschichtung wird dadurch ebenfalls verbessert.

Vorzugsweise werden die Hohlkörper jeweils nach Beendigung des Verfahrensschrittes b) in der nachfolgenden Sprühpause, in der vorzugsweise der silikonisierte Hohlkörper abtransportiert und der nächste zu beschichtende Hohlkörper antransportiert wird, vor dem aus der Sprühdüse austretenden Gasstrom abgeschirmt. Diese Abschirmung des Gasstromes erfolgt vorzugsweise durch eine Ablenkung des Gasstromes, damit die an- und abzutransportierenden Hohlköper nicht von dem Gasstrom getroffen werden können, was möglicherweise zu einer Verschiebung des Hohlkörpers auf dem Förderband oder gar zu einem Umfallen der auf dem Förderband stehenden Hohlkörper führen könnte.

Vorzugsweise werden als Hohlkörper Glas- oder Kunststoffhohlkörper silikonisiert. Vorzugsweise werden als Hohlkörper Fläschchen, Vials, Karpulen, Spritzenkörper oder Vartridges silikonisiert. Vartridges bezeichnen Mischformen aus Fläschchen und Karpulen.

Vorzugsweise wird vor dem Verfahrensschritt a) der zu silikonisierende Hohlkörper aus einer Gruppe von Hohlkörpern vereinzelt. Dies erleichtert die nachfolgende zentrierte Positionierung des zu beschichtenden Hohlkörpers unter der Sprühdüse in der Sprühstation.

Vorzugsweise wird nach dem Verfahrensschritt c) der silikonisierte Hohlkörper einer Wärmebehandlung unterzogen. Die aufgebrachte Silikonschicht wird dadurch thermisch fixiert. Vorzugsweise ist der Wärmebehandlung ein Trocknungsvorgang vorgeschaltet.

Vorzugsweise wird der Sprühvorgang gemäß Verfahrensschritt b) mittels einer die Sprühdüse aufweisenden Sprüheinrichtung durchgeführt, wobei vor jeder Inbetriebnahme der Sprüheinrichtung, vorzugsweise beim Einschalten der Sprüheinrichtung und/oder nach jeder Betriebsunterbrechung, z. B. nach einer einstellbaren Zeit des Stillstandes der Sprüheinrichtung, die Sprüheinrichtung einem Spülvorgang unterzogen wird. Der Spülvorgang wird vorzugsweise automatisch durchgeführt.

Der Spülvorgang wird vorzugsweise in Anwesenheit eines Hohlkörpers durchgeführt und besteht vorzugsweise aus einer vorgegebenen Anzahl von Sprühstößen, wobei die jeweilige Sprühmenge vorzugweise ebenfalls vorwählbar ist. Die Anzahl der Sprühstöße beträgt vorzugsweise 1 bis 20, insbesondere 3 bis 6. Die Sprühmenge pro Sprühstoß entspricht vorzugsweise derjenigen Menge an Silikonfluid, die beim nachfolgenden regulären Beschichtungsvorgang der Hohlkörper verwendet wird. Dies bedeutet, dass die Sprühmenge ebenfalls vorzugsweise 1 bis 20 µl, besonders bevorzugt 1 bis 15 µl, insbesondere 3 bis 8 µl beträgt. Nach dem Spülvorgang wird der betreffende Hohlkörper, der auch als "Opfer-Hohlkörper" bezeichnet wird, verworfen. Danach geht die Beschichtungsvorrichtung in den automatischen Silikonisierungsbetrieb über. Im Vergleich zu den herkömmlichen Beschichtungsverfahren muss lediglich ein Hohlkörper verworfen werden.

Der Spülvorgang wird vorzugsweise bei der Innensilikonisierung von kleinen Hohlkörpern mit einem Innenvolumen von 1 ml bis 10 ml eingesetzt. Es hat sich bezeigt, dass insbesondere bei kleinen Sprühmengen von 3 bis 6 µl, ein gutes Beschichtungsergebnis erzielt werden kann, wenn dieser Spülvorgang vorgeschaltet wird.

Die erfindungsgemäße Beschichtungsvorrichtung zur Silikonisierung der Innenfläche von Hohlkörpern, die mindestens eine Öffnung aufweisen, weist eine Transporteinrichtung zum Transportieren der Hohlkörper und eine Sprühstation auf, wobei die Sprühstation mindestens eine Sprüheinrichtung mit einer Sprühdüse und eine Positioniereinrichtung aufweist, wobei die Transporteinrichtung ein Fördermittel aufweist, auf dem die Hohlkörper aufrecht stehend unter die Sprühdüse transportierbar und aus dem Bereich der Sprühdüse abtransportierbar sind, wobei die Sprühdüse nach unten in Richtung des Fördermittels ausgerichtet und zur Abgabe eines Sprühnebels eines Silikonfluids ausgebildet ist, wobei die Positioniereinrichtung Mittel für die zur Sprühdüse zentrischen Positionierung des zu silikonisierenden Hohlkörpers aufweist, und wobei die Beschichtungsvorrichtung derart konfiguriert ist, dass während der Abgabe des Sprühnebels die Sprühdüse nicht in den Hohlkörper eintaucht, sondern in einem Abstand über der Öffnung angeordnet ist.

Das Fördermittel ist vorzugsweise ein Förderband.

Die Hohlkörper durchlaufen alle Stationen der Beschichtungsvorrichtung in aufrechter Position. Durch den Wegfall diverser maschineller Einrichtungen, die bisher insbesondere für das Wenden der Hohlkörper erforderlich waren, reduziert sich der technische Aufwand auf ein Minimum.

Die Sprühdüse ist vorzugsweise in vertikaler Richtung verschiebbar angeordnet und wird für den jeweiligen Sprühvorgang bis auf einen vorgegebenen Abstand A zur Ebene der Öffnung des Hohlkörpers abgesenkt.

Vorzugsweise ist in der Sprühstation ein Abschirmelement angeordnet, das in den Sprühpausen unter die Sprühdüse verfahrbar ist. Befindet sich kein Hohlkörper in der Sprühstation, schützt das Abschirmelement den nachfolgenden Hohlkörper und verhindert einerseits eine Verunreinigung des Hohlkörpers und andererseits das Umfallen des Hohlkörpers.

Vorzugsweise weist das Abschirmelement ein nach oben offenes U-förmiges Profil auf. Das U-förmige Profil weist vorzugsweise eine Bodenwand und nach oben abgewinkelte Seitenwände auf. Die Bodenwand ist vorzugsweise horizontal ausgerichtet. Das aus der Sprühdüse während des Sprühvorgangs ausströmende Gas, insbesondere Luft, trifft auf das Abschirmelement und wird nach oben umgelenkt. Der Gasstrom kommt mit den Hohlkörpern nicht in Kontakt, so dass die Hohlkörper ungehindert ausgetauscht werden können.

Da die Hohlkörper nicht gewendet werden müssen, kann die Positioniereinrichtung auf einfache Weise mit wenigen Komponenten ausgestattet sein. Vorzugsweise umfassen die Mittel der Positioniereinrichtung mindestens zwei senkrecht zur Transportrichtung des Förderbandes verschiebbare Positionierbacken.

Vorzugsweise weist die Sprühdüse eine Innendüse und eine Außendüse auf, wobei zwischen der Innendüse und der Außendüse eine Mischkammer angeordnet ist. In der Mischkammer wird das Silikonfluid in das Gas, insbesondere Luft, dispergiert, so dass die Dispersion als Sprühnebel die Außendüse verlassen kann.

Vorzugsweise ist der Durchmesser D₃ der Außendüse größer als der Durchmesser D₂ der Innendüse. Besonders bevorzugt sind folgende Durchmesserverhältnisse 2 ≤ D₃/D₂ ≤ 20, insbesondere 5 ≤ D₃/D₂ ≤ 10. Der größere Durchmesser D₃ in Bezug auf den Durchmesser D₂ hat den Vorteil, dass sich vor der Innendüse kein Gaspolster bilden kann. Damit wird das Eindringen von Gas in die Innendüse und in den Fluidkanal verhindert. Gasbläschen in den Kanälen und Zuführleitungen des Silikonfluids können weitgehend vermieden werden.

Vorzugsweise werden große Durchmesserverhältnisse dann eingesetzt, wenn kleine Hohlkörper mit einem Innenvolumen von 1 bis 10 ml mit entsprechend kleinen Sprühmengen von 3 bis 6 µl silikonisiert werden sollen.

Der Durchmesser D₂ ist vorzugswiese kleiner D₁, wobei D₁ den Innendurchmesser der Fluidzuleitung bezeichnet. Bevorzugte Werte für D₂ sind 0,01 mm bis 0,5 mm.

Vorzugsweise ist in der Sprühstation eine Hohlkörpererkennungseinrichtung angeordnet. Wenn die Hohlkörpererkennungseinrichtung das Vorhandensein eines zentriert positionierten Hohlkörpers erkennt, wird der jeweilige Sprühvorgang gestartet.

Vorzugsweise ist in der Sprühstation eine Sprühnebelerkennungseinrichtung angeordnet. Wenn der Sprühnebel nicht den vorgegebenen Kriterien entspricht, d.h. wenn der Sprühnebel in Form und Intensität keine vollständige Benetzung des Hohlkörpers zur Folge hat, wird der Hohlkörper aus der Sprühstation abtransportiert und verworfen.

Vorzugsweise ist vor der Sprühstation eine Vereinzelungsstation angeordnet.

Vorzugsweise weist die Sprühdüse einen Fluidkanal auf, der an eine Fluidzuführleitung angeschlossen ist, wobei mindestens die Fluidzuführleitung einen Innendurchmesser D₁ mit 0,8 mm ≤ D₁ ≤ 2 mm aufweist. Es hat sich gezeigt, dass bei Einhaltung eines bestimmten Innendurchmessers D₁ keine Gasbläschen in der Zuführleitung und/oder des Fluidkanals entstehen. Dadurch kann die vorgegebene Dosiermenge eingehalten werden und eine gleichbleibende Beschichtungsqualität garantiert werden. Fluidzuführleitungen mit einem Durchmesser D₁ von 0,8 mm bis 1,2 mm werden vorzugsweise für die Silikonisierung von kleinen Hohlkörpern eingesetzt, bei denen eine Sprühmenge von 3 bis 6 µl eingesetzt wird. Diese Maßnahme trägt dazu bei, dass sich in der Fluidleitung des Silikonfluids keine Gasbläschen bilden.

Beispielhafte Ausführungsformen werden nachfolgend anhand der Zeichnungen näher erläutert. Es zeigen:
- Figur 1: eine schematische Darstellung der erfindungsgemäßen Vorrichtung in Seitenansicht (oben) und in Draufsicht (unten),
- Figur 2: eine vergrößerte Seitenansicht der Sprühstation vor dem Beschich-tungsvorgang,
- Figur 3: eine andere vergrößerte Seitenansicht der Sprühstation während des Sprühvorgangs und
- Figur 4: einen Längsschnitt einer Sprüheinrichtung mit Sprühdüse.

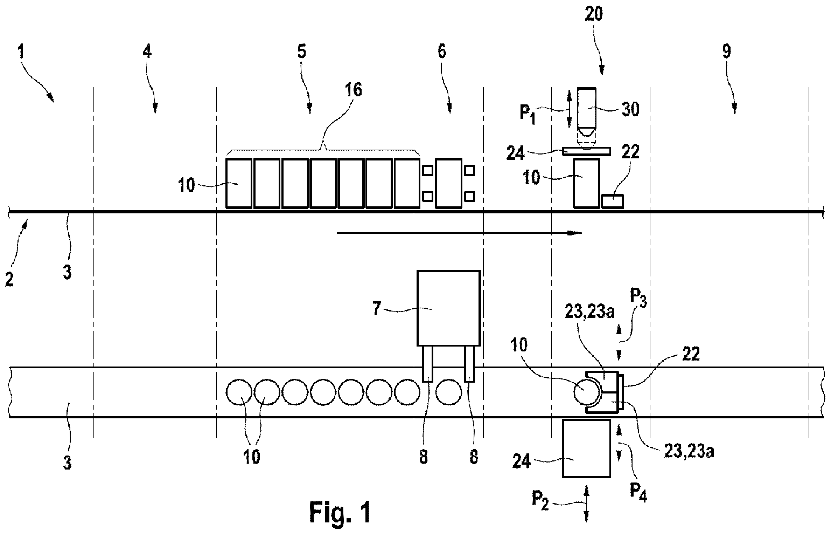

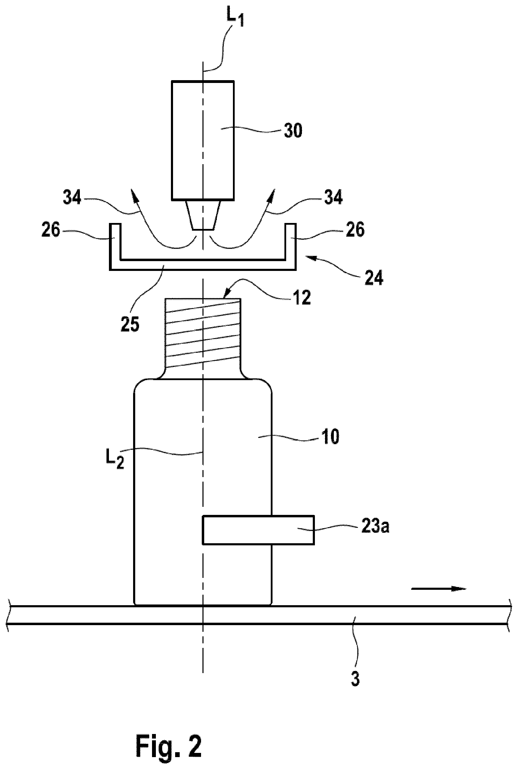

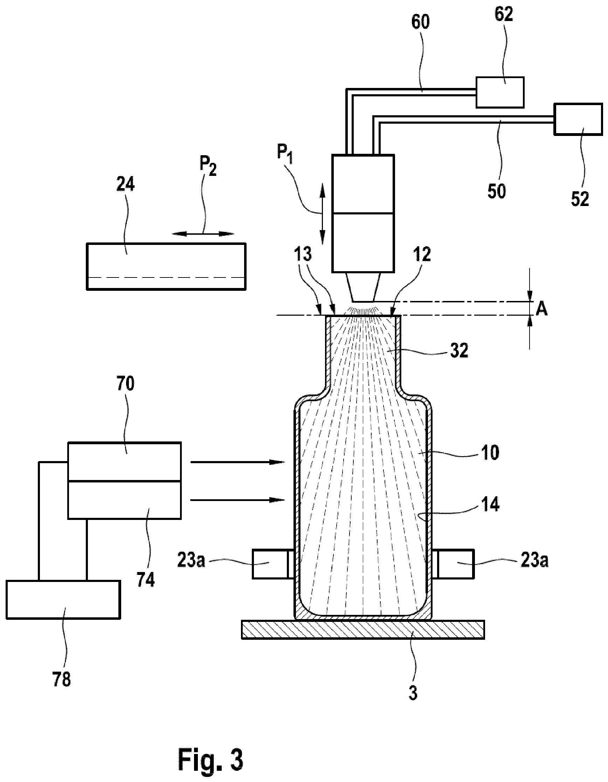

In der Figur 1 ist eine Beschichtungsvorrichtung 1 schematisch dargestellt, die eine Transporteinrichtung 2 mit einem Förderband 3 aufweist, auf dem die zu beschichtenden Hohlkörper 10 aufrecht stehend, mit ihrer Öffnung 12 nach oben weisend transportiert werden (siehe auch Figuren 2 und 3).

Die Hohlkörper 10 durchlaufen zunächst eine Waschstation 4 und werden anschließend in einer Staustrecke 5 gesammelt. In einer nachfolgenden Vereinzelungsstation 6 wird der jeweils zu beschichtende Hohlkörper 10 aus der Gruppe 16 der Hohlkörper 10 mittels einer Vereinzelungseinrichtung 7, die einen Vereinzelungsgreifer 8 aufweist, vereinzelt und anschließend der Sprühstation 20 zugeführt.

In der Sprühstation 20 ist eine Sprühdüse 30 in vertikaler Richtung (Doppelpfeil P₁) verfahrbar angeordnet ist. Die gestrichelt eingezeichnete Sprühdüse 30 markiert die Sprühposition.

Der zu beschichtende Hohlkörper 10 wird in der Sprühstation 20 mittels einer Positioniereinrichtung 22, die Mittel 23 in Gestalt zweier Positionierbacken 23a aufweist, zentriert positioniert. Die Positionierbacken 23a sind senkrecht zum Förderband 3 in Richtung der jeweiligen Doppelpfeile P₃, P₄ verschiebbar angeordnet. Wenn ein neuer zu silikonisierender Hohlkörper 10 antransportiert wird, werden die Positionierbacken 23a über das Förderband 3 geschoben. Der neue Hohlkörper 10 wird durch die Positionierbacken 23a derart unter der Sprühdüse 30 positioniert, dass die Längsachse L₁ der Sprühdüse 30 und die Längsachse L₂ des Hohlkörpers 10 möglichst zusammenfallen, wie aus der Figur 2 zu entnehmen ist. Da beide Achsen L1 und L2 zusammenfallen, gibt es keinen Zentrierfehler.

In der Figur 1 ist die Situation vor Beginn des Sprühvorgangs dargestellt, wobei zwischen der Sprühdüse 30 und dem zu besprühenden Hohlkörper 10 noch ein Abschirmelement 24 angeordnet ist.

In der Figur 2 ist diese die Sprühpause betreffende Situation vergrößert dargestellt. Es ist zu sehen, dass aus der Sprühdüse 30 ein permanenter Gasstrom 34 austritt, der durch das Abschirmelement 24 umgelenkt wird, so dass der Gasstrom von dem darunter positionierten Hohlkörper 10 ferngehalten wird. In der hier gezeigten Ausführungsform besteht dieses Abschirmelement 24 aus einem U-Profil mit einer Bodenwand 25 und zwei seitlichen Wänden 26, so dass der Gasstrom 34 nach oben umgelenkt wird.

In der Figur 3 ist eine vergrößerte Seitenansicht der Sprühstation 20 für den Sprühvorgang dargestellt. Die Seitenansicht ist gegenüber der Seitenansicht von Figur 2 um 90 ° gedreht. Die Sprühdüse 30 ist bis auf den Abstand A abgesenkt worden. Der Abstand A bezeichnet den Abstand zwischen der Ebene 13 der Öffnung 12 und der Spitze der Sprühdüse 30. Die Spitze der Sprühdüse 30 wird durch die Spitze der Außendüse 42 gebildet. Die Sprühdüse 30 ist in Richtung des Doppelpfeils P1 vertikal verschiebbar angeordnet und mit einer Fluidzuführleitung 60 einer Fluidzuführeinrichtung 62 sowie mit einer Gaszuführleitung 50 einer Druckgaszuführeinrichtung 52 verbunden.

Während des Sprühvorgangs wird das Silikonfluid mit dem Trägergas gemischt, so dass ein Sprühnebel 32 an der Sprühdüse 30 auftritt. Dieser Sprühnebel 32 füllt den gesamten Innenraum des Hohlkörpers 10 aus und schlägt sich an der Innenfläche 14 nieder.

Das Abschirmelement 24, das in Richtung des Doppelpfeils P₂ verschiebbar angeordnet ist, ist seitlich neben der Sprühdüse 30 geparkt. In der Sprühstation 20 ist weiterhin noch eine Hohlkörpererkennungseinrichtung 70 und eine Sprühnebelerkennungseinrichtung 74 zu sehen, deren Sensoren auf den Hohlkörper 10 gerichtet sind, was durch die beiden Pfeile angedeutet ist. Beide Erkennungseinrichtungen 70 und 74 sind mit einer Steuereinrichtung 78 verbunden. Die Steuereinrichtung 78 ist sowohl mit der Transporteinrichtung 2 als auch mit der Sprühdüse 30, den Zuführeinrichtungen 62 und 52, der Antriebseinrichtung zum Verschieben der Sprühdüse 30 und der Antriebseinrichtung des Abschirmelements 24 verbunden (nicht dargestellt).

Nach dem Sprühvorgang werden die Positionierbacken 23a zurückgefahren, so dass der silikonisierte Hohlkörper 10 abtransportiert werden kann. Gleichzeitig wird die Sprühdüse 30 aus ihrer Sprühposition in die angehobene Position hochgefahren und das Abschirmelement 24 unter die Sprühdüse gefahren, so dass der permanent aus der Sprühdüse 30 ausströmende Gasstrom 34 abgelenkt und somit von dem abtransportierten Hohlkörper 10 ferngehalten wird. Diese Anordnung wird beibehalten, bis ein weiterer noch nicht silikonisierter Hohlkörper 10 unter der Sprühdüse 30 zentriert positioniert worden ist.

Der jeweils silikonisierte Hohlkörper 10 wird anschließend in eine Wärmebehandlungsstation 9 transportiert, wo ein Einbrennen der Silikonschicht durchgeführt wird (siehe Figur 1).

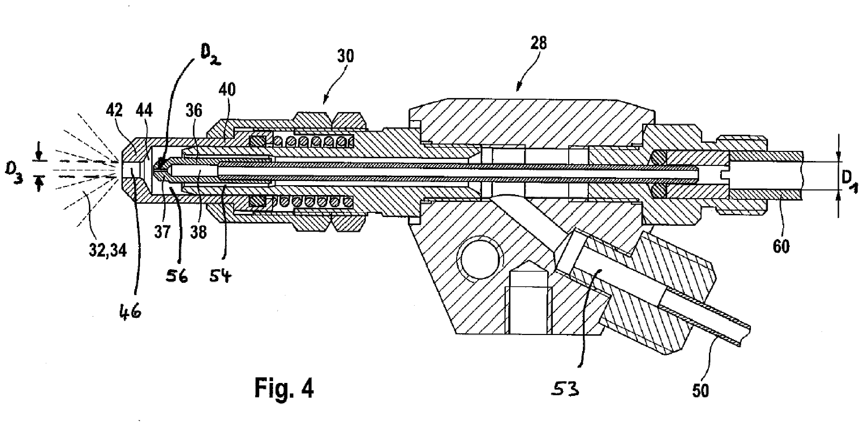

In der Figur 4 ist die Sprühdüse 30 einer Sprüheinrichtung 28 vergrößert dargestellt. In einem Gehäuseteil 40 ist ein Einbauteil 36 angeordnet, an dessen linken Ende eine Innendüse 37 vorgesehen ist. Die Innendüse 37 weist einen Durchmesser D₂ = 0,05 mm auf und steht mit einem Fluidkanal 38 für die Zuführung des Silikonfluids in Verbindung. Der Fluidkanal 38 ist an eine Fluidzuführleitung 60 angeschlossen, die einen Innendurchmesser D₁ aufweist. Der Innendurchmesser D₁ beträgt 1 mm und ist größer als der Innendurchmesser des Fluidkanals 38.

Das Silikonfluid wird beim Zudosieren während des Sprühvorgangs in eine Mischkammer 44 ausgetragen, die sich innerhalb des Gehäuseteils 40 vor der Außendüse 42 befindet.

Der Mischkammer 44 wird Druckluft als Gas, d. h. als Trägermedium über die Gaszuführleitung 50 zugeführt. Die Gaszufuhrleitung 50 mündet in einen Gaskanal 53, der seinerseits in einen ersten Ringkanal 54 mündet. Im Bereich der Innendüse 37 geht der erste Ringkanal 54 in eine zweiten Ringkanal 56 über, der einen deutlich größeren Außendurchmesser aufweist als der erste Ringkanal 54. Im zweiten Ringkanal 56 erfolgt somit ein Druckabfall. In der Mischkammer 44 erfolgt eine Dispergierung des Silikonfluids, so dass aus dem Sprühkanal 46 der Außendüse 42 der gewünschte Sprühnebel 32 austritt.

Der Durchmesser D₂ der Innendüse 37 beträgt D₂ = 0,05 mm und der Durchmesser D₃ des Sprühkanals 46 der Außendüse 42 einen Durchmesser D₃ = 0,5 mm, so dass das Verhältnis D₃/D₂ = 10 beträgt. Dadurch, dass D₃ >> D₂ ist, wird die Ausbildung eines Luftpolsters in der Mischkammer 44 vermieden, so dass keine Luft in die Innendüse 37 eindringen kann, was insbesondere in den Sprühpausen wichtig ist, in denen kein Silikonfluid zugeführt wird. Dieses Merkmal der Sprühdüse 30 ist insbesondere beim Besprühen von kleineren Hohlkörpern mit einem Innenvolumen bis 10 ml von Bedeutung, weil die Sprühmenge lediglich 3 bis 6 µl beträgt und ein Eindringen von Gas, insbesondere Druckluft, in die Silikonzuführung vermieden werden muss.

In der Sprühpause wird über den Fluidkanal 38 kein Silikonfluid aus der Innendüse 37 in die Mischkammer 44 ausgetragen, so dass lediglich das zugeführte Gas als Gasstrom 34 austritt.

Das Silikonisierungsverfahren wird nachfolgend anhand eines Beispiels erläutert:
In einem Produktionslauf können Vials der Gesamtlänge 61 mm und des Körperdurchmessers 22 mm, was einem Nennvolumen von 10 ml entspricht, verarbeitet werden. Dabei kommt eine Emulsion zum Einsatz, die zu 2 Vol.-% aus dem Silikonöl (Dow Corning 365, Warenzeichen der Fa. Dow Corning) und zu 98 Vol.-% aus vollentmineralisiertem Wasser besteht. Im Vorratsbehälter jeder Bürette können 5 l dieser Emulsion bevorratet werden. Je Vial werden während eines einzelnen Sprühstoßes 6 µl dieser Emulsion eingesprüht. Jeder einzelne Sprühstoß dauert rund 0,2 s. Das permanent durch die Sprühdüse 30 strömende Gas ist gefilterte Druckluft, die gegenüber der Atmosphäre einen Überdruck von 0,9 bar aufweist. Auf diese Weise können je Sprüheinheit dreißig Vials silikonisiert werden. Unmittelbar danach erfolgt die Wärmebehandlung, die zu einer festen Verbindung zwischen Silikon und Glas führt.

### Bezugszeichenliste

- 1: Beschichtungsvorrichtung
- 2: Transporteinrichtung
- 3: Förderband
- 4: Waschstation
- 5: Staustrecke
- 6: Vereinzelungsstation
- 7: Vereinzelungseinrichtung
- 8: Vereinzelungsgreifer
- 9: Wärmebehandlungsstation

- 10: Hohlkörper
- 12: Öffnung des Hohlkörpers
- 13: Öffnungsebene
- 14: Innenfläche
- 16: Gruppe von Hohlkörpern

- 20: Sprühstation
- 22: Positioniereinrichtung
- 23: Mittel zum Positionieren
- 23a: Positionierbacken
- 24: Abschirmelement
- 25: Bodenwand
- 26: Seitenwand
- 28: Sprüheinrichtung

- 30: Sprühdüse
- 32: Sprühnebel
- 34: Gasstrom
- 36: Einbauteil
- 37: Innendüse
- 38: Fluidkanal

- 40: Gehäuseteil
- 42: Außendüse
- 44: Mischkammer
- 46: Sprühkanal

- 50: Gaszuführleitung
- 52: Druckgaszufuhreinrichtung
- 53: Gaskanal
- 54: erster Ringkanal
- 56: zweiter Ringkanal

- 60: Fluidzuführleitung
- 62: Fluidzuführeinrichtung

- 70: Hohlkörpererkennungseinrichtung

- 74: Sprühnebelerkennungseinrichtung

- 78: Steuereinrichtung

- A: Abstand zwischen
- L₁: Längsachse Sprühdüse
- L₂: Längsachse Hohlkörper
- P1: Doppelpfeil
- P2: Doppelpfeil
- P3: Doppelpfeil
- P4: Doppelpfeil

- D₁: Durchmesser Fluidzuführleitung
- D₂: Durchmesser Innendüse
- D₃: Durchmesser Außendüse

## Patentansprüche

1. Verfahren zur Silikonisierung der Innenfläche (14) von Hohlkörpern (10), die mindestens eine Öffnung (12) aufweisen,
wobei die Innenfläche (14) mittels einer Sprühdüse (30) mit einem Silikonfluid besprüht wird,
**gekennzeichnet durch folgende Verfahrensschritte,**
a) die Hohlkörper (10) werden nacheinander aufrecht stehend unter die Sprühdüse (30) transportiert und mit ihrer nach oben weisenden Öffnung (12) unter der Sprühdüse (30) zentriert positioniert,
b) die Innenfläche (14) des jeweiligen Hohlkörpers (10) wird von oben mittels der Sprühdüse (30) in einem Sprühvorgang mit einem Sprühnebel (32) eines Silikonfluids besprüht und
c) die silikonisierten Hohlkörper (10) werden jeweils nach dem Sprühvorgang aufrecht stehend aus dem Bereich der Sprühdüse (30) abtransportiert.

2. Verfahren nach Anspruch 1, **dadurch gekennzeichnet, dass** im Schritt b) ein Sprühnebel (32) aus einem Gas und einem Silikonfluid verwendet wird.

3. Verfahren nach einem der Ansprüche 1 oder 2, **dadurch gekennzeichnet, dass** als Silikonfluid eine Silikonemulsion aus Wasser und Silikonöl verwendet wird.

4. Verfahren nach einem der Ansprüche 1 bis 3, **dadurch gekennzeichnet, dass** aus der Sprühdüse (30) ein permanenter Gasstrom (34) ausströmt und dass jeweils im Verfahrensschritt b) das Silikonfluid zur Erzeugung des Sprühnebels (32) dem Gasstrom (34) zudosiert wird.

5. Verfahren nach einem der Ansprüche 1 bis 4, **dadurch gekennzeichnet, dass** die Hohlkörper (10) jeweils nach Beendigung des Verfahrensschrittes b) in der nachfolgenden Sprühpause vor dem aus der Sprühdüse (30) ausströmenden Gasstrom abgeschirmt werden.

6. Verfahren nach einem der Ansprüche 1 bis 5, **dadurch gekennzeichnet, dass** nach dem Verfahrensschritt c) die silikonisierten Hohlkörper (10) einer Wärmebehandlung unterzogen werden.

7. Verfahren nach einem der Ansprüche 1 bis 6, **dadurch gekennzeichnet,**
**dass** der Sprühvorgang gemäß Verfahrensschritt b) mittels einer die Sprühdüse (30) aufweisenden Sprüheinrichtung (28) durchgeführt wird, und
**dass** vor jeder Inbetriebnahme der Sprüheinrichtung (28) die Sprühvorrichtung (28) einem Spülvorgang unterzogen wird.

8. Verfahren nach Anspruch 7, **dadurch gekennzeichnet, dass** der Spülvorgang in Anwesenheit eines Hohlkörpers (10) in der Sprühstation (20) durchgeführt wird, und dass der Hohlkörper (10) nach dem Spülvorgang verworfen wird.

9. Beschichtungsvorrichtung (1) zur Silikonisierung der Innenfläche (14) von Hohlkörpern (10), die mindestens eine Öffnung (12) aufweisen, mit einer Transporteinrichtung (2) zum Transportieren der Hohlkörper (10) und mit einer Sprühstation (20), wobei die Sprühstation (20) mindestens eine Sprüheinrichtung (28) mit einer Sprühdüse (30) und eine Positioniereinrichtung (22) aufweist, wobei die Transporteinrichtung (2) ein Fördermittel (3) aufweist, auf dem die Hohlkörper (10) aufrecht stehend unter die Sprühdüse (30) transportierbar und aus dem Bereich der Sprühdüse abtransportierbar sind,
wobei die Sprühdüse (30) nach unten in Richtung des Fördermittels (3) ausgerichtet und zur Abgabe eines Sprühnebels (32) eines Silikonfluids ausgebildet ist, wobei die Positioniereinrichtung (22) Mittel (23) für die zur Sprühdüse (30) zentrischen Positionierung des zu silikonisierenden Hohlkörpers (10) aufweist,
und wobei die Beschichtungsvorrichtung (1) derart konfiguriert ist, dass während der Abgabe des Sprühnebels (32) die Sprühdüse (30) nicht in den Hohlkörper (10) eintaucht, sondern in einem Abstand (A) über der Öffnung (12) angeordnet ist.

10. Vorrichtung nach Anspruch 9, **dadurch gekennzeichnet, dass** in der Sprühstation (20) ein Abschirmelement (24) angeordnet ist, das in den Sprühpausen unter die Sprühdüse (30) verfahrbar ist.

11. Vorrichtung nach einem der Ansprüche 9 oder 10, **dadurch gekennzeichnet, dass** die Mittel (23) der Positioniereinrichtung (22) mindestens zwei senkrecht zur Transportrichtung des Förderbandes (3) verschiebbare Positionierbacken (23a) umfassen.

12. Vorrichtung nach einem der Ansprüche 9 bis 11, **dadurch gekennzeichnet, dass** die Sprühdüse (30) eine Innendüse (37) und eine Außendüse (42) aufweist und
dass zwischen der Innendüse (37) und der Außendüse (42) eine Mischkammer (44) angeordnet ist.

13. Vorrichtung nach einem der Ansprüche 9 bis 12, **dadurch gekennzeichnet, dass** in der Sprühstation (20) eine Hohlkörpererkennungseinrichtung (70) angeordnet ist.

14. Vorrichtung nach einem der Ansprüche 9 bis 13, **dadurch gekennzeichnet, dass** in der Sprühstation (20) eine Sprühnebelerkennungseinrichtung (74) angeordnet ist.

15. Vorrichtung nach einem der Ansprüche 9 bis 14, **dadurch gekennzeichnet, dass** die Sprühdüse (30) einen Fluidkanal (38) aufweist, der an eine Fluidzuführleitung (60) angeschlossen ist, wobei mindestens die Fluidzuführleitung (60) einen Innendurchmesser D₁ mit 0,8 ≤ D₁ ≤ 2 mm aufweist.

## Claims

1. Method for the siliconization of the inner surface (14) of hollow bodies (10) which have at least one opening (12),
wherein the inner surface (14) is sprayed with a silicone fluid by way of a spray nozzle (30),
**characterized by the following method steps,**
a) the hollow bodies (10) are transported, standing upright one behind the other, under the spray nozzle (30) and are positioned with their upwardly pointing opening (12) centred under the spray nozzle (30),
b) the inner surface (14) of the respective hollow body (10) is sprayed with a spray mist (32) of a silicone fluid from above by way of the spray nozzle (30) in a spraying process, and
c) the siliconized hollow bodies (10), in each case after the spraying process, are transported, standing upright, out of the region of the spray nozzle (30).

2. Method according to Claim 1, **characterized in that**, in step b), a spray mist (32) composed of a gas and of a silicone fluid is used.

3. Method according to either of Claims 1 and 2, **characterized in that**, as silicone fluid, a silicone emulsion composed of water and silicone oil is used.

4. Method according to one of Claims 1 to 3, **characterized in that** a permanent gas stream (34) flows out of the spray nozzle (30), and **in that**, in each case in method step b), the silicone fluid is metered into the gas stream (34) in order to generate the spray mist (32).

5. Method according to one of Claims 1 to 4, **characterized in that** the hollow bodies (10), in each case after the end of method step b), are shielded, in the subsequent spray interval, from the gas stream flowing out of the spray nozzle (30) .

6. Method according to one of Claims 1 to 5, **characterized in that**, after method step c), the siliconized hollow bodies (10) are subjected to a heat treatment.

7. Method according to one of Claims 1 to 6, **characterized**
**in that** the spraying process in method step b) is performed by way of a spray device (28) which has the spray nozzle (30), and
**in that**, before every commencement of operation of the spray device (28), the spray device (28) is subjected to a rinsing process.

8. Method according to Claim 7, **characterized in that** the rinsing process is performed when a hollow body (10) is present in the spray station (20), and **in that** the hollow body (10) is ejected after the rinsing process.

9. Coating apparatus (1) for the siliconization of the inner surface (14) of hollow bodies (10) which have at least one opening (12), having a transport device (2) for transporting the hollow bodies (10), and having a spray station (20),
wherein the spray station (20) has at least one spray device (28) with a spray nozzle (30) and with a positioning device (22),
wherein the transport device (2) has a conveying means (3) on which the hollow bodies (10), standing upright, are transportable under the spray nozzle (30) and are transportable out of the region of the spray nozzle,
wherein the spray nozzle (30) is oriented downward in the direction of the conveying means (3) and is designed for discharging a spray mist (32) of a silicone fluid,
wherein the positioning device (22) has means (23) for the positioning, centrally with respect to the spray nozzle (30), of the hollow body (10) to be siliconized,
and wherein the coating apparatus (1) is configured such that, during the discharging of the spray mist (32), the spray nozzle (30) does not protrude into the hollow body (10) but is arranged above the opening (12) with a spacing (A).

10. Apparatus according to Claim 9, **characterized in that**, in the spray station (20), there is arranged a shield element (24) which, in the spray intervals, is movable under the spray nozzle (30).

11. Apparatus according to either of Claims 9 and 10, **characterized in that** the means (23) of the positioning device (22) comprise at least two positioning jaws (23a) which are displaceable perpendicularly with respect to the transport direction of the conveyor belt (3).

12. Apparatus according to one of Claims 9 to 11, **characterized in that** the spray nozzle (30) has an inner nozzle (37) and an outer nozzle (42), and **in that** a mixing chamber (44) is arranged between the inner nozzle (37) and the outer nozzle (42).

13. Apparatus according to one of Claims 9 to 12, **characterized in that** a hollow body detection device (70) is arranged in the spray station (20).

14. Apparatus according to one of Claims 9 to 13, **characterized in that** a spray mist detection device (74) is arranged in the spray station (20).

15. Apparatus according to one of Claims 9 to 14, **characterized in that** the spray nozzle (30) has a fluid duct (38) which is connected to a fluid feed line (60), wherein at least the fluid feed line (60) has an inner diameter D₁ of 0.8 ≤ D₁ ≤ 2 mm.

## Revendications

1. Procédé de siliconisation de la surface intérieure (14) de corps creux (10) qui présentent au moins une ouverture (12),
la surface intérieure (14) étant pulvérisée avec un fluide de silicone au moyen d'une buse de pulvérisation (30),
**caractérisé par les étapes de procédé** suivantes :
a) les corps creux (10) sont transportés debout les uns derrière les autres sous la buse de pulvérisation (30) et sont positionnés de manière centrée avec leur ouverture (12) tournée vers le haut sous la buse de pulvérisation (30),
b) la surface intérieure (14) du corps creux (10) est pulvérisée par le haut au moyen de la buse de pulvérisation (30) dans une opération de pulvérisation avec un brouillard de pulvérisation (32) d'un fluide de silicone, et
c) les corps creux (10) siliconés sont chacun évacués après l'opération de pulvérisation en position debout hors de la région de la buse de pulvérisation (30).

2. Procédé selon la revendication 1, **caractérisé en ce qu'à** l'étape b), on utilise un brouillard de pulvérisation (32) constitué d'un gaz et d'un fluide de silicone.

3. Procédé selon l'une quelconque des revendications 1 et 2, **caractérisé en ce que** l'on utilise en tant que fluide de silicone une émulsion de silicone constituée d'eau et d'huile de silicone.

4. Procédé selon l'une quelconque des revendications 1 à 3, **caractérisé en ce qu**'un flux de gaz permanent (34) s'écoule hors de la buse de pulvérisation (30) et en ce que le fluide de silicone est à chaque fois ajouté par dosage au flux de gaz (34) à l'étape de procédé b) pour générer le brouillard de pulvérisation (32).

5. Procédé selon l'une quelconque des revendications 1 à 4, **caractérisé en ce que** les corps creux (10) à chaque fois à l'issue de l'étape de procédé b) au cours de la pause de pulvérisation subséquente, sont protégés contre le flux de gaz s'écoulant hors de la buse de pulvérisation (30).

6. Procédé selon l'une quelconque des revendications 1 à 5, **caractérisé en ce qu**'après l'étape de procédé c), les corps creux siliconés (10) sont soumis à un traitement thermique.

7. Procédé selon l'une quelconque des revendications 1 à 6, **caractérisé en ce que** l'opération de pulvérisation est effectuée selon l'étape de procédé b) au moyen d'un dispositif de pulvérisation (28) présentant la buse de pulvérisation (30), et
**en ce qu'**avant chaque mise en service du dispositif de pulvérisation (28), le dispositif de pulvérisation (28) est soumis à une opération de rinçage.

8. Procédé selon la revendication 7, **caractérisé en ce que** l'opération de rinçage est effectuée en présence d'un corps creux (10) dans le poste de pulvérisation (20), et **en ce que** le corps creux (10) est jeté après l'opération de pulvérisation.

9. Dispositif de revêtement (1) pour la siliconisation de la surface intérieure (14) de corps creux (10) qui présentent au moins une ouverture (12), comprenant un dispositif de transport (2) pour transporter les corps creux (10) et un poste de pulvérisation (20),
le poste de pulvérisation (20) présentant au moins un dispositif de pulvérisation (28) avec une buse de pulvérisation (30) et un dispositif de positionnement (22),
le dispositif de transport (2) présentant un moyen de transport (3) sur lequel les corps creux (10) peuvent être transportés en position debout sous la buse de pulvérisation (30) et peuvent être évacués hors de la région de la buse de pulvérisation,
la buse de pulvérisation (30) étant orientée vers le bas dans la direction du moyen de transport (3) et étant réalisée pour distribuer un brouillard de pulvérisation (32) d'un fluide de silicone,
le dispositif de positionnement (22) présentant des moyens (23) pour le positionnement centré par rapport à la buse de pulvérisation (30) du corps creux (10) à siliconer,
et le dispositif de revêtement (1) étant configuré de telle sorte que pendant la distribution du brouillard de pulvérisation (32), la buse de pulvérisation (30) ne plonge pas dans le corps creux (10) mais soit disposée à une distance (A) au-dessus de l'ouverture (12).

10. Dispositif selon la revendication 9, **caractérisé en ce que** dans le poste de pulvérisation (20) est disposé un élément de protection (24) qui peut être déplacé sous la buse de pulvérisation (30) au cours des pauses de pulvérisation.

11. Dispositif selon l'une quelconque des revendications 9 et 10, **caractérisé en ce que** les moyens (23) du dispositif de positionnement (22) comprennent au moins deux mâchoires de positionnement (23a) déplaçables perpendiculairement à la direction de transport de la bande de transport (3).

12. Dispositif selon l'une quelconque des revendications 9 à 11, **caractérisé en ce que** la buse de pulvérisation (30) présente une buse intérieure (37) et une buse extérieure (42) et **en ce qu'**entre la buse intérieure (37) et la buse extérieure (42) est disposée une chambre de mélange (44).

13. Dispositif selon l'une quelconque des revendications 9 à 12, **caractérisé en ce que** dans le poste de pulvérisation (20) est disposé un dispositif de détection de corps creux (70).

14. Dispositif selon l'une quelconque des revendications 9 à 13, **caractérisé en ce que** dans le poste de pulvérisation (20) est disposé un dispositif de détection de brouillard de pulvérisation (74).

15. Dispositif selon l'une quelconque des revendications 9 à 14, **caractérisé en ce que** la buse de pulvérisation (30) présente un canal fluidique (38) qui est raccordé à une conduite d'alimentation en fluide (60), au moins la conduite d'alimentation en fluide (60) présentant un diamètre intérieur D₁ tel que 0,8 ≤ D₁ ≤ 2 mm.
